# DEMANDE DE BREVET EUROPEEN

(11) **EP 0 903 732 A1**
(43) Date de publication de la demande: **24.03.1999**
(21) Numéro de dépôt: 98402309.3
(22) Date de dépôt: 18.09.1998
(51) Int. Cl.: G11B 7/007, G11B 20/00

(54) **Protection anti-copie d'un disque optique numérique par adjonction d'une zone ayant des propriétés optiques modifiables lors de sa lecture**

(30) Priorité: 19.09.1997 FR 9711785
(71) Demandeur: Milgram, Maurice, 75013 Paris (FR)
(72) Inventeur: Milgram, Maurice, 75013 Paris (FR)
(74) Mandataire: Leszczynski, André

(57) **Abrégé**

Cette invention propose un procédé de protection contre la copie de données enregistrées sur un support de données lisibles par un faisceau laser du type CD-Rom.. Les applications concernent donc la protection anti-copie des disques optiques numériques (CD-Rom, DVD-Rom, etc.).

Le support comportera une zone sensible sur au moins une partie de la surface, cette zone possédant au moins une propriété optique modifiable par éclairement par le faisceau laser.Ce procédé implique un programme informatique d'exploitation de ces données qui exécute des lectures dans la zone sensible (selon la description ci-dessus) à deux instants au moins différents et utilise la comparaison des résultats de ces lectures afin de vérifier que la propriété optique de la zone sensible a été modifiée.La propriété optique modifiée se maintient pendant une durée de modification prédeterminée. Cette zone sensible peut s'étendre à tout le support. Cette propriété optique modifiable peut être son indice de reflexion ou sa polarisation.. Elle peut être obtenue par le dépot d'une couche d'un matériau photoréfractif tel que le niobate de lithium.

## Description

L'objet de la présente invention est la protection anti-copie de supports d'information du type CD-Rom, protection de plus en plus utile avec la banalisation des moyens de duplication (graveurs par exemple) de ces supports.

Cette protection est physique et ne demande aucune modification matérielle des lecteurs installés (plusieurs dizaine de millions).

Le principe de cette protection est l'utilisation de propriétés optiques de certains matériaux pour créer des zones du support ayant une certaine mémoire des lectures immédiatement précédentes. Ces zones permettent d'avoir un comportement dynamique des données qui serait absent de copies sur des supports classiques. Il reste à exploiter cette mémoire dans les logiciels d'application utilisant les données du support, en particulier dans le logiciel d'installation.

Dans la suite CD désignera tout support d'information lisible par un faisceau laser de type CD-Rom, CD-Audio, CD-R, DVD, DVD-Rom, carte optique, etc.

Nous appellerons **zone sensible** (ZS en abrégé) une partie du CD constituée d'un matériau dont une ou plusieurs propriétés optiques (coefficient de transmission, indice de réflexion, polarisation, ..) est **modifiée par le passage du faisceau de lecture**. Ces matériaux (que nous noterons MP) sont appelés photoréfractifs, photochromes, ils ont un comportement non linéaire sous une forte illumination, par exemple le niobate de lithium.

Cette modification prenant effet après ce passage et pendant une durée allant de la milliseconde à l'infini ; cette durée sera désignée par «durée de modification » (DM ). On supposera pour simplifier que toute ZS lue pendant la DM donne une séquence de 0. Ces ZS pourront être obtenues par une couche d'un matériau spécifique issu des recherches en optique non linéaire (matériau photochrome, photorésistant,....).

Si la DM est infinie, ou du moins de quelques mois, on peut utiliser le procédé pour contrôler le nombre de copies installées à partir d'un même CD. La ZS ne serait d'ailleurs pas confinée à une seule zone du CD mais disséminée un peu partout et utilisée de manière indirecte, par exemple en fournissant une adresse de lecture ou un nombre d'octets à lire.

On peut obtenir une DM infinie en utilisant un changement irréversible du matériau, comme dans le cas des sels d'argent utilisés en photographie classique. La modification irréversible des propriétés optiques (transmission, indice, reflexion, polarisation) du matériau sous forte illumination ponctuelle est un moyen simple pour obtenir une DM, ce résultat peut aussi provenir de la combinaison de différentes couches ayant des constantes de temps différentes. Une première couche opaque pouvant servir de masque à une autre couche de type sel d'argent, la couche opaque étant rendue partiellement transparente par une forte illumination dont l'effet subsisterait pendant quelques secondes.

Avec une DM très petite (typiquement inférieure à 100ms), on peut concevoir des **données dynamiques**, théoriquement impossibles à copier directement. Supposons que les programmes exploitant les données inscrites sur le CD procèdent en combinant des données lues à la même place du CD mais à des instants différents t1 et t2. Si t2-t1 est supérieur à DM, les deux informations sont identiques ; sinon, elles peuvent être différente. En cas de copie sur un CD « standard » (sans ZS) , les mêmes programmes auront un comportement différents, rendant inutilisable ce CD copié.

### Utilisation du concept de données dynamiques dans un programme.

En général, les éditeurs de logiciels utilisant comme support physique les CD Rom ou d'autres disques optiques numériques, ne souhaitent pas contraindre les utilisateurs à maintenir le CD Rom dans le lecteur pendant l'utilisation effective du logiciel. Il existe donc, en général, une procédure d'installation du logiciel inscrite sur le CD Rom et qui transfère sur le disque dur de l'ordinateur hôte les fichiers nécessaires au fonctionnement du logiciel. La présence du CD Rom ne sera requise à nouveau que pour réinstaller le logiciel ou pour ajouter des modules non installés au départ.

Si le programme d'installation (appelé en général Set Up en anglais) utilise de manière spécifique et incontournable certaines informations dynamiques, inscrites sur le CD, une copie (illicite par exemple) de ce CD avec ZS vers un support classique (CD sans ZS) ne pourra pas fonctionner correctement. Ceci suppose qu'il soit difficile, même à un expert, de remplacer ce programme d'installation par un autre n'utilisant plus du tout l'aspect dynamique des données. Il est probable que si cette utilisation se bornait à quelques tests parfaitement repérables, le dit expert aurait beau jeu de la contourner. On retrouve bien sûr ici le même type de problèmes qu'avec les clefs informatiques matérielles et les programmes qu'elles sont censées protéger contre un usage illicite. En fait, on peut dire qu'un programme exploitant ce principe des données dynamiques est protégé par une sorte de clef matérielle qui est la ZC utilisée. A titre d'exemple mais de manière non exclusive, il est possible d'utiliser dans un branchement conditionnel le résultat d'une comparaison entre deux informations lues au même endroit du CD à un intervalle de temps connu car lié au déroulement du programme comme condition logique du dit branchement. On peut même aller lire directement une adresse de branchement ou une donnée intervenant dans son calcul à un emplacement spécifique du CD muni ou non d'une ZC. Selon les actions de lectures précédentes, cet emplacement aura acquis une valeur déterminée et influera directement sur le déroulement de la séquences d'instructions.

On voit donc qu'on peut se protéger contre les installations multiples avec une DM infinie et contre la copie sur un autre CD ou autre support avec une DM brève et les données dynamiques.

On peut donc résumer la présente invention par le fait qu'elle comporte une zone sensible sur au moins une partie de la surface servant de support aux données lisibles par un faisceau laser, cette zone possédant au moins une propriété optique modifiable par éclairement par le faisceau laser.

La propriété optique modifiée se maintient pendant une durée de modification prédeterminée. Cette zone sensible peut s'étendre à tout le support. Cette propriété optique modifiable peut être son indice de reflexion ou sa polarisation.. Elle peut être obtenue par le dépot d'une couche d'un matériau photoréfractiftel que le niobate de lithium.

Cette invention propose un procédé de protection contre la copie de données enregistrées sur un support de données lisibles par un faisceau laser du type CD-Rom reposant sur une ou plusieurs des caractéristiques ci-dessus. Ce procédé est associé à un programme informatique d'exploitation de ces données qui exécute des lectures dans la zone sensible (selon la description ci-dessus) à deux instants au moins différents et utilise la comparaison des résultats de ces lectures afin de vérifier que la propriété optique de la zone sensible a été modifiée.

Ces lectures peuvent se répéter jusqu'à obtention d'un résultat donné, caractérisant ainsi un paramètre physique de la zone sensible, ce paramètre devant appartenir à un certain intervalle prédeterminé.

Le programme d'exploitation des données pourra aussi combiner plusieurs lectures de la zone sensible pour calculer une valeur ; cette valeur pouvant être utilisée dans ce programme, par exemple mais non exclusivement pour exécuter un branchement à une adresse ou pour définir la prochaine piste du support à lire.

## Revendications

1. Support de données lisible par un faisceau laser du type CD-Rom caractérisé par le fait qu'il comporte une zone sensible sur au moins une partie de la surface servant de support aux données lisibles par un faisceau laser, cette zone possédant au moins une propriété optique modifiable par éclairement par le faisceau laser.

2. Support selon la revendication 1 caractérisé par le fait que la propriété optique modifiée se maintient pendant une durée de modification prédeterminée.

3. Support selon l'une quelconque des revendications 1 et 2 caractérisé par le fait que cette zone sensible peut s'étendre à tout le support.

4. Support selon l'une quelconque des revendications 1 à 3 caractérisé par le fait que cette propriété optique modifiable est son coefficient de transmission, son indice de reflexion ou sa polarisation..

5. Support selon l'une quelconque des revendications 1 à 4 caractérisé par le fait que la zone sensible peut être obtenue par le dépot d'une couche d'un matériau photoréfractif tel que le niobate de lithium.

6. Procédé de protection contre la copie de données enregistrées sur un support de données lisibles par un faisceau laser du type CD-Rom caractérisé par le fait qu'il consiste à utiliser comme support original des données un support selon l'une quelconque des revendications 1 à 5..

7. Procédé selon la revendication 6 caractérisé par le fait qu'aux données est associé à un programme informatique d'exploitation de ces données qui exécute des lectures dans la zone sensible du support à deux instants au moins différents et utilise la comparaison des résultats de ces lectures afin de vérifier que la propriété optique de la zone sensible a été modifiée.

8. Procédé selon la revendication 7 caractérisé par le fait que l'on utilise un support selon la revendication 2 et que le programme effectue des lectures de la zone sensible à plusieurs reprises jusqu'à obtention d'un résultat donné, caractérisant ainsi un paramètre physique de la zone sensible, ce paramètre devant appartenir à un certain intervalle prédeterminé.

9. Procédé selon l'une quelconque des revendications 7 et 8, caractérisé par le fait que le programme combine les résultats de lectures des données dans la zone sensible effectuées à deux instants différents.
